(19) Europäisches Patentamt
European Patent Office
Office européen des brevets

(11) **EP 3 939 437 A1**

(12) # EUROPEAN PATENT APPLICATION

(43) Date of publication:
**19.01.2022 Bulletin 2022/03**

(21) Application number: **20186554.0**

(22) Date of filing: **17.07.2020**

(51) International Patent Classification (IPC):
**A23L 2/52** (2006.01)   **A23L 5/46** (2016.01)
**A23L 2/58** (2006.01)   **A23L 29/256** (2016.01)

(52) Cooperative Patent Classification (CPC):
**A23L 5/46; A23L 2/52; A23L 2/58; A23L 29/256**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GNT Group B.V.**
**5731 HR Mierlo (NL)**

(72) Inventors:
• **LEEB, Elena Maria**
  **5731 HR MIERLO (NL)**
• **VOLKERT, Marcus**
  **5731 HR MIERLO (NL)**
• **MACDONALD, Jane Lee**
  **5731 HR MIERLO (NL)**

(74) Representative: **Algemeen Octrooi- en Merkenbureau B.V.**
**P.O. Box 645**
**5600 AP Eindhoven (NL)**

(54) **A COMPOSITION COMPRISING SPIRULINA EXTRACT**

(57)    The present invention relates to the use of a sulfated polysaccharide to stabilize a foodstuff containing phycocyanin from spirulina extract. It also relates to compositions and foodstuffs containing phycocyanin from spirulina extract and a sulfated polysaccharide. The foodstuffs can be syrups, jams, jellies, beverages, confectionary, fruit preparations, condiments and sauces. In particular, the invention uses sulfated polysaccharides from macroalgae such as fucoidan.

EP 3 939 437 A1

**Description**

The present invention relates to the use of a sulfated polysaccharide to stabilize a foodstuff containing phycocyanin from spirulina extract. It also relates to compositions and foodstuffs containing phycocyanin from spirulina extract and a sulfated polysaccharide.

Background

The use of natural food pigments over synthetic ones has increased in the food industry, due to increased consumer demands. While several natural pigments have been applied, there is a need for a stable natural blue pigment which can be used on its own or blended with other pigments to deliver a range of colors including but not limited to green, purple, brown, and black.

It is known to use spirulina-extracts to add blue color to foodstuffs. The blue pigment of spirulina, for example *Spirulina platensis* (synonym for *Arthrospira platensis*), is the protein phycocyanin. Phycocyanin is to-date the only natural blue pigment approved by the US-FDA (FR Doc No: 2013-19550) and European Union as a coloring food. It is sold in liquid or in powder form for use as blue color in foods.

Phycocyanin, however, has the disadvantage of being unstable in aqueous systems, leading to several disadvantages such as aggregation and subsequent turbidity increase, sediment formation (precipitation), loss of color intensity and change of color hue, which limits the use of phycocyanin as natural pigment. Thus, phycocyanin is restricted in its use for its food coloring properties in some applications, such as acidic beverages.

In addition to the negative impact of acidic foodstuff conditions, it is also a challenge to stabilize the color intensity and color hue of phycocyanin containing foodstuffs against thermal treatment. Thermal treatment is a common manufacturing process in the food industry to secure microbiological safety of the foodstuff. In case of cold filled beverages, preservatives are added. However, both stabilizing approaches influence the stability of phycocyanin: the color of the foodstuff tends to fade quickly after thermal treatment and/or the addition of preservatives.

US2018271119 discloses the use of an acid-pH-resistant phycocyanin derived from *Galdieria sulphuraria,* which is capable of growing at both high temperature and low pH, for use in acidic compositions. The increased acid stability of phycocyanin (and allophycocyanin) extracted from *Galdieria sulphuaria* might be explained by the differences in the amino acid sequence in comparison to phycocyanin from commercially available spirulina (such as *Arthrospira platensis, Arthrospira maxima,* etc.). But *Galdieria sulphuraria* phycocyanin extracts have not yet been approved or undergone long term testing, as spirulina derived phycocyanin has.

CN107899005A describes tablets for improving immunity containing algal polysaccharide sulfate (fucoidan), phycocyanin, seaweed powder and excipients.

Selig, et al. Food Hydrocolloids,74, 46-52, (2017) discloses the use of beet-pectin to stabilize phycocyanin from a spirulina-extract at pH 6.8 in an aqueous solution.

Dewi, et al. IOP Conf. Ser.: Earth Environ. Sci. 55 (2017) discloses a spirulina-extract encapsulated in κ-carrageenan for use in an aqueous solution.

Earlier patent applications by the Applicant: PCT/EP2019/081792, PCT/EP2019/081790, PCT/EP2019/081806 and PCT/EP2019/081840 describe compositions comprising a spirulina-extract comprising phycocyanin and a multi-sulfated carrageenan.

Although the above compositions provide stability to colored foodstuffs containing phycocyanin, there is still a need for alternative solutions that are easy to handle and provide long term stability also when processing the foodstuff.

Disclosure of the invention

The present invention in a first aspect relates to the use of a sulfated polysaccharide to stabilize a phycocyanin containing foodstuff, with the proviso that the sulfated polysaccharide is not a sulfated carrageenan.

The use of the sulfated polysaccharide increases color stability of phycocyanin in foodstuffs over the heating process as well as storage duration and solves one or more of the compounding negative effects of acidic conditions and heat treatment on the blue color. The negative effects are an increase in turbidity, aggregation, precipitation, color fading and color hue changes. The negative effects might be present directly after processing or develop over storage duration (weeks or months), as foodstuffs need to withstand long transport and varying storage conditions.

In a second aspect, the present invention relates to a composition for stabilizing a phycocyanin containing foodstuff comprising a spirulina-extract comprising phycocyanin and a sulfated polysaccharide.

In a third aspect, the present invention relates to a formulation comprising a composition for stabilizing a phycocyanin containing foodstuff and a carrier.

In a fourth aspect, the present invention relates to a liquid foodstuff comprising a spirulina-extract comprising phycocyanin and a sulfated polysaccharide.

In a fifth aspect, the present invention relates to a method of preparing a foodstuff containing phycocyanin by adding a spirulina-extract comprising phycocyanin and a sulfated polysaccharide to the foodstuff.

As described above the use of the sulfated polysaccharide of the invention results in an increased stability of a phycocyanin containing foodstuff. Increased stability has the effect that sedimentation in the foodstuff is reduced to a large extent or is absent. Sedimentation can be determined visually. Further stability is evaluated by the determination of CIE L*a*b* values and quantitative analysis of total sum of blue absorbance. In particular stability against heat treatment and along storage is measured in a model system as described hereafter.

Detailed description of the invention

Phycocyanin

The invention relates to the stabilization of a foodstuff containing phycocyanin. Phycocyanin can be present in the form of a phycocyanin containing spirulina-extract. Spirulina belongs to the phylum cyanobacteria and contains beside the blue phycobiliproteins also other proteins, carbohydrates, lipids, fiber and amongst others, minerals. The phycocyanin containing spirulina-extract can be a water extract of several different cyanobacteria, for example *Arthrospira platensis* and *Arthrospira maxima.* The phycobiliproteins comprise C-phycocyanin and allophycocyanin.

The phycocyanin containing spirulina extract can be obtained by aqueous extraction of phycocyanin from *Arthrospira platensis* and separation of undesired components, like solids, from and concentration of the extract to obtain a phycocyanin containing spirulina-extract. The amount of phycocyanin in the spirulina extract typically ranges between 8 and 60 wt. % dry matter (DM).

Sulphated polysaccharides

The term "sulfated polysaccharides" relates to polysaccharides having at least one sulfate group per disaccharide unit. This definition includes polysaccharides and oligosaccharides.

A preferred class of sulfated polysaccharides are sulfated polysaccharides from macroalgae, such as red algae, green algae and brown algae. The term macroalgae also includes seaweed. These sulfated polysaccharides are for instance described in detail by Guangling Jiao et al, Mar.Drugs, 9, 196-223 (2011).

Sulfated polysaccharides from macroalgae according to the invention include sulfated galactans, such as agarans (galactans with 4-linked $\alpha$-galactose residues of the L-series), in particular porphyran; fucose containing sulphated polysaccharides (fucans), in particular fucoidan; and ulvan.

Preferably, according to the invention, fucoidan is used as the sulfated polysaccharide. Such a fucoidan can be obtained as an extract from brown macroalgae *Fucus vesiculosus, Undaria pinnatifida, Fucus serratus, Ascophyllum nodosum* and *Macrocystis pyrifera*. Preferably, an extract from *Fucus vesciculosus or Undaria pinnatifida* is used.

According to an embodiment, the extract from brown macroalgae contains at least 40 wt.% fucoidan, preferably at least 60 wt.% fucoidan, based on the total weight (dry matter) of the extract.

The weight ratio of sulfated polysaccharide to phycocyanin is from 0.5:1 to 400:1, preferably from 0.75:1 to 50:1, more preferably from 1:1 to 20:1. If the amount of sulfated polysaccharide is too low, stabilization is not sufficient.

Evaluation stability

It is known that characteristics of the foodstuff (such as pH, ionic strength, etc.) might affect the configuration of phycocyanin and consequently impacts color hue. As pH decreases and the equilibrium of phycocyanin is shifted to monomers, the color hue shifts from dark blue to blue green (Buchweitz, 2016). In general, at pH values of 3.9 and less the equilibrium of phycocyanin is shifted to monomers.

The color performance of the invention in a food application is assessed using hue measurements and the total sum of blue absorbance.

The color hue is measured using a spectrophotometer and a CIE L*a*b* value is calculated. Colorimeter measurements provide a numerical representation of color based upon Opponent Color Theory where CIE L*a*b* represents (CIELAB color space):

    **L\* scale:** Light vs. Dark where a low number (0-50) indicates Dark and a high number (51-100) indicates Light.

    **a\* scale:** Red vs. Green where a positive number indicates Red and a negative number indicates Green.

    **b\* scale:** Yellow vs. Blue where a positive number indicates Yellow and a negative number indicates Blue.

To further characterize the stability of the color of the foodstuff, absorbance is measured. To determine the magnitude of color retention, the sum of the blue absorbance measurements at $Abs_{620nm}$ - $Abs_{750nm}$, $Abs_{650nm}$ - $Abs_{705nm}$

and $Abs_{667nm}$ - $Abs_{750nm}$ are calculated and used by equation:

$$\text{Total sum of blue absorbance}$$
$$= (Abs_{620nm} - Abs_{750nm}) + (Abs_{650nm} - Abs_{750nm}) + (Abs_{667nm} - Abs_{750nm})$$

In order to evaluate stability of the foodstuff containing phycocyanin, the foodstuff is tested in a model system representing thermal treatment and accelerated storage. The aggregation behavior as well as the remaining color intensity are used as a measure to evaluate color performance. The aggregation behavior is determined visually with the formation or absence of sediment. The color stability is evaluated by the determination of the above described CIE L*a*b* values and quantitative analysis of (total sum of) blue absorbance.

The model system has the following steps:

- add spirulina extract containing phycocyanin to a 7 wt.% sucrose solution to get a phycocyanin concentration of 0.012 wt.%
- adjust the pH to 3.5 or 2.9 by addition of citric acid
- process the solution thermally to a temperature of 85 °C and fill hot into PET bottles and cool in an ice bath to less than 35 °C
- store the bottles in a Binder KBF-LQC (Binder, Tuttlingen, Germany) equipped with a MASTER TL-D Super 80 18W/865 1SL/25 (Philips) as VIS light source at 35 °C with a light dose of 0.3MLuxh, which is equivalent to a storage of the samples at store light conditions of 6 weeks.

In an embodiment, the foodstuff color is characterized as stable, if the total sum of blue absorbance after accelerated storage in the model system is more than 30% of the total sum of blue absorbance before the heat treatment.

A method for the phycocyanin quantification was validated by Yoshikawa & Belay (2008). The amount of native phycocyanin (mg/mL) can be calculated from photometric measurements of a dilution in pH 6.0 buffer. It relies upon absorbance measurements at 620 and 650 nm and the extinction coefficients of C-phycocyanin and allophycocyanin at these wavelengths and defined pH. The total phycocyanin content in a spirulina-extract can be calculated according to the following equations:

$$\text{allophycocyanin} \left(\frac{mg}{mL}\right) = 0.180(Abs_{650nm} - Abs_{750nm}) - 0.042(Abs_{620nm} - Abs_{750nm})$$

$$\text{C} - \text{phycocyanin} \left(\frac{mg}{mL}\right) = 0.162(Abs_{620nm} - Abs_{750nm}) - 0.098(Abs_{650nm} - Abs_{750nm})$$

$$\text{Total phycocyanin} \left(\frac{mg}{mL}\right) = \text{allophycocyanin} \left(\frac{mg}{mL}\right) + \text{C} - \text{phycocyanin} \left(\frac{mg}{mL}\right)$$

To determine the amount of phycocyanin added to a composition, the dosage level of phycocyanin containing spirulina-extract is multiplied by the total phycocyanin content in the phycocyanin containing spirulina-extract.

Composition

According to a second aspect, the present invention provides a composition for stabilizing a phycocyanin containing foodstuff, comprising:

a spirulina-extract comprising phycocyanin
a sulfated polysaccharide,

wherein the composition comprises 0.5-50 wt.%, phycocyanin and wherein the weight ratio of sulfated polysaccharide to phycocyanin is from 0.5:1 to 400:1
wherein the wt.% is relative to the total composition
with the proviso that the sulfated polysaccharide is not a sulfated carrageenan.
In the above composition the sulfated polysaccharide is preferably an extract from macroalgae as described above, preferably an extract from brown macroalgae containing at least 40 wt.% fucoidan, more preferably at least 60 wt.% fucoidan, based on the total weight (dry matter) of the extract. In particular an extract from *Fucus vesciculosus or Undaria pinnatifida* is used.

To distinguish from prior art compositions containing fucoidan for pharmaceutical applications, such as described in CN107899005, it is specified that the composition of the invention does not contain a (further) seaweed extract other than the fucoidan containing extract containing at least 40 wt.% fucoidan.

The composition contains preferably 1-40 wt.%, more preferably 2-30 wt.% phycocyanin. The weight ratio of sulfated polysaccharide to phycocyanin is preferably from 0.75:1 to 50:1, more preferably from 1:1 to 20:1.

The composition of the second aspect of the invention preferably has a water content of less than 15 wt.%, more preferably less than 10 wt.%, most preferably less than 8 wt.% based on the total weight of the composition.

Such a composition can be prepared by mixing a spirulina-extract containing phycocyanin, a sulfated polysaccharide and water, creating an aqueous mixture, followed by drying, e.g. by freeze-drying or spray drying, of the aqueous mixture.

In an embodiment, the pH of the aqueous mixture is adjusted before drying, for instance by using an appropriate acid or alkaline buffer such as citric acid or trisodium citrate. The aqueous mixture preferably has a pH from 5 to 9.

The composition according to the second aspect of the invention can be added as such to a foodstuff.

Formulation

According to a third aspect, the invention provides a formulation for stabilizing a phycocyanin containing foodstuff comprising 0.5-95 wt.% of the composition described above and 5-99.5 wt.% of a carrier.

The invention thus provides a formulation which is a dry powder or granule, comprising

a spirulina-extract comprising phycocyanin
a sulfated polysaccharide, preferably fucoidan
a carrier
water
wherein the formulation comprises 0.5-50 wt.%, preferably 1-40 wt.%, more preferably 2-30 wt.% phycocyanin;
and 0.1-15 wt.% water,
wherein the weight ratio of sulfated polysaccharide to phycocyanin is from 0.5:1 to 400:1, preferably from 0.75:1 to 50:1, more preferably from 1:1 to 20:1;
with the proviso that the sulfated polysaccharide is not a sulfated carrageenan.

The carrier for the formulation which is a dry powder or granule may be selected from the group consisting of maltodextrin, sucrose, starch, alginate and chitosan. A preferred carrier is maltodextrin.

In the formulation which is a dry powder or granule, the water content is preferably less than 12 wt.%, more preferably less than 8 wt.%.

The invention further provides a liquid formulation comprising

a spirulina-extract comprising phycocyanin
a sulfated polysaccharide, preferably fucoidan
water
wherein the liquid formulation comprises 0.5-12 wt.%, preferably 0.75-9 wt.%, more preferably 1.5-7.75 wt.% phycocyanin;
wherein the weight ratio of sulfated polysaccharide to phycocyanin is from 0.5:1 to 400:1, preferably from 0.75:1 to 50:1, more preferably from 1:1 to 20:1;
with the proviso that the sulfated polysaccharide is not a sulfated carrageenan.

The liquid formulation comprises 15-60 wt.% water, preferably 20-45 wt.% water.

The liquid formulation can further comprise glycerol, sugar alcohols, monosaccharide or disaccharide, in particular glucose, fructose, sucrose, invert sugar, trehalose, lactose or mixtures thereof. Preferred is invert sugar or sucrose.

Liquid foodstuff: beverages and syrups

According to a fourth aspect, the present invention provides a liquid foodstuff comprising:

a spirulina-extract comprising phycocyanin
a sulfated polysaccharide, preferably fucoidan
water

wherein the foodstuff comprises
0.003-0.15 wt.%, preferably 0.006-0.1 wt.%, more preferably 0.008-0.05 wt.% phycocyanin and 45-99 wt.% water;

wherein the weight ratio of sulfated polysaccharide to phycocyanin is from 0.5:1 to 400:1, preferably from 0.75:1 to 50:1, more preferably from 1:1 to 20:1;

with the proviso that the sulfated polysaccharide is not a sulfated carrageenan.

The liquid foodstuff can further contain ethanol, in case of an alcoholic beverage.

According to an embodiment, the liquid foodstuff is a beverage with a pH of 2.5-4.6.

According to an embodiment, the liquid foodstuff is a beverage with a pH of 4.7-8, wherein the liquid foodstuff further contains a chelating agent. The chelating agent is present in an amount of 1-2000 ppm (weight basis). The chelating agent can be selected from the group consisting of ethylene diamine tetra acetic acid (EDTA) and sodium, potassium and calcium salts thereof, and L-glutamic acid N, N-diacetic acid tetrasodium salt (GLDA). Preferably EDTA is used in an amount of 1-100 ppm (weight basis).

The beverage may be a juice, juice drink, smoothie, sports drink, flavored tea, flavored water, carbonated beverage, non-carbonated beverage, nutritional drink or alcoholic beverage.

According to an embodiment, the liquid foodstuff is a syrup with a pH from 2-3.7, which contains 45-80 wt.% water and a sweetening agent. The sweetening agent may be selected from the group consisting of invert sugar, sucrose, high fructose corn syrup, corn syrup, sugar alcohol, fructose, glucose, trehalose, lactose, honey, agave, stevia, sucralose, aspartame, neotame, acesulfame potassium, monk fruit, saccharine and mixtures thereof.

Such syrups may be used in beverages, jams, jellies, fruit preparations and confectionary such as candies and gummies.

Method

According to a fifth aspect, the present invention provides a method of stabilizing a phycocyanin containing foodstuff, comprising the steps of:

mixing a spirulina extract comprising phycocyanin and a sulfated polysaccharide with water at a pH of at least 5, obtaining a mixture;

adding the mixture to a foodstuff;

wherein the weight ratio of sulfated polysaccharide to phycocyanin is from 0.5:1 to 400:1, preferably from 0.75:1 to 50:1, more preferably from 1:1 to 20:1, with the proviso that the sulfated polysaccharide is not a sulfated carrageenan.

In case of a foodstuff with pH below 5, the method above is followed by a step of adjusting the pH of the foodstuff, in particular by adding an acid or acidifying component.

The foodstuff can be treated by thermally processing to at least 65 °C followed by filling it into a container. It can also be cold filling into a container, optionally followed by thermal processing.

The process of preparing the foodstuff can optionally comprise one or more of the following steps:

a) adding a sweetener, flavor, vitamin, mineral, salt, buffer, juice, or other beverage components;

b) adding a chelating agent, such as EDTA;

c) adding other pigments, such as anthocyanins;

d) adding an additive, such as preservatives;

e) adding solvents to obtain the total volume, such as water and alcohol;

Other components

The composition, formulation and liquid foodstuff of the invention may contain other components. The other components typically can be any one of diluents, sweeteners, stabilizers, chelating agents, acids, salts, proteins, flavors, vitamins, minerals, thickeners, other pigments, additives and preservatives.

Examples of sweetening agents are invert sugar, sucrose, high fructose corn syrup, corn syrup, fructose, glucose, trehalose, lactose, honey, agave, stevia, sucralose, aspartame, neotame, acesulfame potassium, monk fruit and saccharine.

Examples of pigments are safflomin (safflower), anthocyanin, carotenoid, betanin, bixin (annatto), lycopene, curcumin and chlorophyll. The pigments may be added to the blue colored spirulina-extract to blend into other colors, such as for example green using safflomin.

Examples of preservatives are salts, sorbic acid, benzoic acid, natamycin, nisin and sulfites.

Examples of salts are ionic compounds that can be formed with the positively charged cation such as calcium, magnesium, potassium, sodium, or copper with salt forming anions like for example acetate, carbonate, chloride, citrate, oxide, phosphate, sorbate, benzoate, hexametaphosphate or sulfate.

Examples of acids are phosphoric, citric, lactic, malic, adipic, tartaric acid and sodium acid pyrophosphate.

Examples of thickeners are gelatin, starch, pectin, konjac or agar.

The preferred embodiments , including for the sulfated polysaccharide, in the first aspect of the invention also apply to the second, third, fourth and fifth aspect of the invention.

Use

As described above, the present invention is used to stabilize phycocyanin containing foodstuffs. These foodstuffs can be selected from syrups, jams, jellies, beverages, confectionary, fruit preparations, condiments and sauces.

References

Buchweitz, M. (2016). 17 - Natural Solutions for Blue Colors in Food. In R. Carle, & R. M. Schweiggert (Eds.), Handbook on Natural Pigments in Food and Beverages (pp. 355-384): Woodhead Publishing.
Dewi, E. N. et al. (2017). "Physical characteristics of phycocyanin from Spirulina microcapsules using different coating materials with freeze drying method", IOP Conf. Ser.: Earth Environ. Sci. 55.
Selig, M.J., et al., (2017). "Protection of blue color in a spirulina derived phycocyanin extract from proteolytic and thermal degradation via complexation with beet-pectin", Food Hydrocolloids, 74, 46-52.
Yoshikawa, N., & Belay, A. (2008). Single-Laboratory Validation of a Method for the Determination of c-Phycocyanin and Allophycocyanin in Spirulina (Arthrospira) Supplements and Raw Materials by Spectrophotometry. Journal of AOAC International, 91, 524-529.

Experimental

**Methods:**

**Dry matter**

The dry matter was determined by analyzing the water content of the sample using a gravimetrical method as described by GEA (Analytical method: Powder Moisture Accurate Standard Method - analytical method A1a). The sample was dried in an oven with a drying temperature of 103°C $\pm$ 2°C for 16 hours. The moisture content was calculated according to following equation. The analysis for all samples was done in triplicate.

$$\text{Moisture } (\%) = \frac{b - c}{b - a} \cdot 100\%$$

a= mass of empty dish [g]
b= mass of dish and powder [g]
c= mass of dish and dried powder [g]

By means of the moisture content of the sample, the dry matter can be calculated as follows:

$$\text{Dry matter } (\%) = 100 - \text{Moisture } (\%)$$

**Color stability of spirulina extracts in a beverage model system**

The aggregation behavior as well as the remaining color intensity of spirulina extracts were used as a measure to evaluate the coloring performance of spirulina extracts in a final application. The aggregation behavior was determined visually with the formation or absence of a sediment in the bottle after thermal processing and accelerated storage. The color stability was evaluated by the determination of CIE L*a*b* values and quantitative analysis of total sum of blue absorbance along processing and storage of the beverage. (e.g. analysis before thermal treatment, after thermal treatment to 85 °C and after accelerated storage (35°C / VIS light dose 0.3 MLuxh)).

Experiments

**Example 1: Protective effect of Fucoidan**

To be able to quantify the protective effect of sulfated polysaccharides, the performance of two different two different spirulina extracts were evaluated in a beverage (reference) but without the addition of a stabilizer. One spirulina extract was present as powder (EXBERRY® Shade blue powder), the other one as liquid product (EXBERRY® Shade blue liquid). The necessary amount of spirulina extract was added to a 7 wt.% sucrose solution to get a final phycocyanin concentration of 0.012 wt.%. The pH of the beverage was adjusted to pH 3.5 and pH 2.9 by addition of citric acid. The beverage solution was thermally processed to 85 °C and filled hot into PET bottles and cooled in an ice bath to less than 35 °C. The bottles were subsequently stored in a Binder KBF-LQC (Binder, Tuttlingen, Germany) at 35 °C and with a VIS light dose of 0.3MLuxh which is equivalent to a storage of the samples at store light conditions of 6 weeks.

The aggregation behavior as well as the remaining color intensity were used as a measure to describe color stability (Table 1).

Table 1: Characteristics of the reference beverage systems (containing 7 wt.% sucrose and spirulina extract)

| | Sediment | L* | a* | b* | Abs 620* | Abs 650* | Abs 667* | % Total sum of blue absorbance |
|---|---|---|---|---|---|---|---|---|
| EXBERRY® Shade blue liquid Beverage pH 3.5 Before thermal treatment | No | -21.0 | -24.7 | -21.0 | 0.9003 | 0.2856 | 0.1027 | 100.0 |
| EXBERRY® Shade blue liquid Beverage pH 3.5 After thermal treatment | Yes | -7.6 | 9.1 | -7.6 | 0.3085 | 0.2424 | 0.2088 | 59.0 |
| EXBERRY® Shade blue liquid Beverage - pH 3.5 Accelerated storage | Yes | -0.4 | 12.3 | -0.4 | 0.1030 | 0.0728 | 0.0592 | 18.2 |
| | | | | | | | | |
| EXBERRY® Shade blue liquid Beverage - pH 2.9 Before thermal treatment | No | 77.2 | -19.8 | -21.6 | 0.7815 | 0.2429 | 0.1143 | 100.0 |
| EXBERRY® Shade blue liquid Beverage - pH 2.9 After thermal treatment | No | 78.5 | -17.0 | -9.1 | 0.5365 | 0.2493 | 0.1756 | 84.4 |
| EXBERRY® Shade blue liquid Beverage -Accelerated storage | No | 88.5 | -4.6 | 4.2 | 0.1483 | 0.0696 | 0.0459 | 23.2 |
| | | | | | | | | |
| EXBERRY® Shade blue powder | No | 79.2 | -20.5 | -20.7 | 0.61014 | 0.25494 | 0.12714 | 100.0 |
| Beverage - pH 2.9 Before thermal treatment | | | | | | | | |

(continued)

| | Sediment | L* | a* | b* | Abs 620* | Abs 650* | Abs 667* | % Total sum of blue absorbance |
|---|---|---|---|---|---|---|---|---|
| EXBERRY® Shade blue powder Beverage - pH 2.9 After thermal treatment | No | 81.4 | -16.8 | -7.5 | 0.38779 | 0.22459 | 0.18009 | 79.9 |
| EXBERRY® Shade blue powder Beverage - pH 2.9 Accelerated storage | No | 90.4 | -4.1 | 4.2 | 0.09788 | 0.0547 | 0.04044 | 19.5 |
| *Absorbance is corrected by the turbidity (measured as absorbance at 750 nm) | | | | | | | | |

Visible from the data of Table 1 is the detrimental effect of thermal treatment at acidic pH on color stability of spirulina extracts. Thereby, a loss of color was detected for both tested pH values (pH 2.9 and 3.5) and different spirulina extracts, resulting in a loss of color to 59%, 84% or 80%, respectively. In addition, sediment formation occurred in the beverage with pH 3.5 after thermal processing and accelerated storage.

Further storage of the beverage samples decreased the color intensity to 18%, 23% or 20%, respectively. In addition, a shift of the color hue from blue to more turquoise values was detected (measurable by increasing b* values).

Protective effect of sulfated polysaccharides

The protective effect of a sulfated polysaccharide from algae on the color stability of a spirulina extract was investigated by the addition of fucoidan to an aqueous spirulina extract and subsequent drying of the mixture. Therefore, fucoidan from *Fucus vesiculosus* (Sigma Aldrich, F8190, Lot # SLCF2313) with a purity of $\geq$ 95% was used. The spirulina extract contained 3.5 wt.% phycocyanin and was blended with fucoidan to achieve a phycocyanin to fucoidan weight ratio of 1 : 1.

The mixture was frozen at -18 °C and subsequently freeze-dried at 0.380 mbar for 30 h and additional 4h at 0.100 mbar (Alpha 2-4 LSC plus, Martin Christ Gefriertrocknungsanlagen GmbH).

The powder was analyzed on its dry matter and phycocyanin content (according to Yoshikawa & Belay, 2008). Additionally the L*a*b* values were determined in a dilution (phosphate buffer, pH 7.0, Th Geyer) to an absorbance of 1.0 at 620 nm. The data are summarized in Table 2.

Table 2: Phycocyanin content and L*a*b* values of a spirulina extract - fucoidan powder with a phycocyanin to fucoidan weight ratio of 1 : 1

| | Dry matter [%] | Total phycocyanin [mg/g] | L* | a* | b* |
|---|---|---|---|---|---|
| Spirulina extract - fucoidan powder (phycocyanin to fucoidan ratio = 1 : 1) | 97.4 | 292.2 | 71.9 | -20.6 | -39.9 |

The blue powder had a water content of 2.6% and contained 29.2% phycocyanin.

The positive effect of fucoidan on the color stability of a spirulina extract were evaluated in a beverage model system (pH 2.9, 7 wt.% sucrose, 0.012 wt.% PC). Thereby the aggregation behavior of the spirulina extract as well as the remaining color intensity were used as a measure to describe the color stability (see Table 3) along processing (e.g. analysis before thermal treatment, after thermal treatment to 85 °C and after accelerated storage(35°C / 0.3MLuxh)) of the beverage.

Table 3: Characteristics of a beverage (pH 2.9, containing 7wt.% sucrose) with a spirulina extract - fucoidan powder (phycocyanin to fucoidan ratio = 1 : 1)

| | Sediment | L* | a* | b* | Abs 620* | Abs 650* | Abs 667* | % Total sum of blue absorbance |
|---|---|---|---|---|---|---|---|---|
| Spirulina extract - fucoidan powder (phycocyanin to fucoidan ratio = 1 : 1) Beverage - Before thermal treatment | No | 90.8 | -16.2 | -9.9 | 0.2848 | 0.2945 | 0.2910 | 100.0 |
| Spirulina extract - fucoidan powder (phycocyanin to fucoidan ratio = 1 : 1) Beverage - After thermal treatment | No | 90.1 | -15.9 | -9.6 | 0.2800 | 0.3040 | 0.3030 | 101.9 |
| Spirulina extract - fucoidan powder (phycocyanin to fucoidan ratio = 1 : 1) Beverage -After accelerated storage | No | 90.7 | -9.5 | -6.6 | 0.1829 | 0.1931 | 0.1875 | 64.7 |

Surprisingly the presence of fucoidan in a spirulina extract powder increased the color stability of the spirulina extract against thermal treatment at acidic pH. Analysis of the beverage revealed that there was no sediment formation and a constant color hue (see L*a*b* values in Table 3) along processing. Furthermore, an increase in the relative amount of the total sum of blue absorbance to 65% was obtained in comparison to only ~20% (Table 1) without the addition of fucoidan.

**Example 2: Influence of phycocyanin to fucoidan ratio**

Fucoidan from a fucoidan supplement (Life extension, containing 85% pure fucoidan and microcrystalline cellulose) was dissolved in demineralized water to a concentration of 14 and 28 wt.%. After stirring the solutions for 30 min the microcrystalline cellulose was separated by a centrifugation at 5,000 g for 10 min. The supernatant (containing the dissolved fucoidan) was separated from the sediment and filled up with demineralized water to the initial volume, to maintain the initial fucoidan concentration. The solutions were blended with an aqueous spirulina extract, containing 3.5wt.% phycocyanin at different ratios to enable various phycocyanin to fucoidan ratios. The mixtures had a pH of 6.7 and a phycocyanin to fucoidan ratio of 1 : 4, 1 : 8 1 : 200 and 1 : 400, respectively.

The products were frozen to -18°C and subsequently freeze-dried at 0.380 mbar for 30 h and additional 4h at 0.100 mbar (Alpha 2-4 LSC plus, Martin Christ Gefriertrocknungsanlagen GmbH).

The powders were analyzed on their dry matter and phycocyanin content (according to Yoshikawa & Belay, 2008). Additionally the L*a*b* values were determined for in a dilution (phosphate buffer, pH 7.0, Th Geyer) to an absorbance of 1.0 at 620 nm. The data are summarized in Table 4.

Table 4: Dry matter, phycocyanin content and L*a*b* values of spirulina extract - fucoidan powders with varying phycocyanin to fucoidan ratios

| | Dry matter [%] | Total phycocyanin [mg/g] | L* | a* | b* |
|---|---|---|---|---|---|
| Spirulina extract - fucoidan powder (phycocyanin to fucoidan ratio = 1 : 4) | 95.8 | 298.9 | 70.8 | -20.7 | -38.4 |
| Spirulina extract - fucoidan powder (phycocyanin to fucoidan ratio = 1 : 8) | 96.1 | 249.7 | 67.4 | -21.0 | -32.1 |
| Spirulina extract - fucoidan powder (phycocyanin to fucoidan ratio = 1 : 200) | 95.9 | 55.2 | 75.5 | -10.0 | -1.4 |
| Spirulina extract - fucoidan powder (phycocyanin to fucoidan ratio = 1 : 400) | 94.8 | 31.7 | 64.5 | -8.5 | 7.5 |

Differences in the phycocyanin content and L\* a\* b\* values were detectable for all tested phycocyanin to fucoidan ratios. The reduced amount of phycocyanin and less bluer color of the powder can be explained by the increasing amount of fucoidan.

The influence of the phycocyanin to fucoidan ratio on the color stability improvement was determined in a beverage model system (pH 2.9, 7.wt% sucrose, 0.012.wt% phycocyanin). In addition the effect of fucoidan (phycocyanin to fucoidan ratio = 1 : 4) on sediment formation was determined in a beverage with pH at 2.9 and 3.5. For all beverages, the aggregation behavior of the spirulina extract as well as the remaining color intensity were used as a measure to describe color stability (see Table 5) along processing of the beverage (e.g. before thermal treatment, after thermal treatment to 85°C and after accelerated storage (35°C / 0.3MLuxh)).

Table 5: Characteristics of a beverage (comprising 7 wt.% sucrose) containing different spirulina extract - fucoidan powders with varying phycocyanin to fucoidan ratios

|  | Sediment | L* | a* | b* | Abs 620* | Abs 650* | Abs 667* | % Total sum of blue absorbance |
|---|---|---|---|---|---|---|---|---|
| Spirulina extract - fucoidan powder (ratio 1 : 4) Beverage - pH 2.9 Before thermal treatment | No | 87.7 | -15.7 | -5.7 | 0.2836 | 0.2911 | 0.2869 | 100.0 |
| Spirulina extract - fucoidan powder (ratio 1 : 4) Beverage - pH 2.9 After thermal treatment | No | 86.4 | -16.0 | -5.7 | 0.2935 | 0.3137 | 0.3100 | 106.5 |
| Spirulina extract - fucoidan powder (ratio 1 : 4) Beverage - pH 2.9 Accelerated storage | No | 89.7 | -7.4 | -2.1 | 0.1546 | 0.1575 | 0.1510 | 53.8 |
|  |  |  |  |  |  |  |  |  |
| Spirulina extract - fucoidan powder (ratio 1 : 4) Beverage - pH 3.5 Before thermal treatment | No | 87.8 | -15.8 | -8.0 | 0.2989 | 0.2810 | 0.2619 | 100.0 |
| Spirulina extract - fucoidan powder (ratio 1 : 4) Beverage - pH 3.5 After thermal treatment | No | 87.1 | -14.9 | -6.4 | 0.2761 | 0.2888 | 0.2807 | 100.4 |
| Spirulina extract - fucoidan powder (ratio 1 : 4) Beverage - pH 3.5 Accelerated storage | No | 90.0 | -6.7 | -1.8 | 0.1425 | 0.1427 | 0.1348 | 49.9 |
|  |  |  |  |  |  |  |  |  |
| Spirulina extract - fucoidan powder (phycocyanin to fucoidan ratio = 1 : 8.1) Beverage - pH 2.9 Before thermal treatment | No | 86.0 | -15.4 | -3.9 | 0.2869 | 0.2958 | 0.2932 | 100.0 |
| Spirulina extract - fucoidan powder (phycocyanin to fucoidan ratio = 1 : 8.1) Beverage - pH 2.9 After thermal treatment | No | 82.5 | -15.3 | -2.5 | 0.3011 | 0.3175 | 0.3126 | 106.3 |

(continued)

| | Sediment | L* | a* | b* | Abs 620* | Abs 650* | Abs 667* | % Total sum of blue absorbance |
|---|---|---|---|---|---|---|---|---|
| Spirulina extract - fucoidan powder (phycocyanin to fucoidan ratio = 1 : 8.1) Beverage - pH 2.9 Accelerated storage | No | 85.8 | -8.3 | -1.1 | 0.1865 | 0.1887 | 0.1802 | 63.4 |
| | | | | | | | | |
| Spirulina extract - fucoidan powder (phycocyanin to fucoidan ratio = 1 : 200) Beverage - pH 2.9 Before thermal treatment | No | 59.1 | -9.8 | 15.9 | 0.5969 | 0.3956 | 0.2271 | 100.0 |
| Spirulina extract - fucoidan powder (phycocyanin to fucoidan ratio = 1 : 200) Beverage - pH 2.9 After thermal treatment | No | 54.1 | -9.0 | 17.5 | 0.2184 | 0.2004 | 0.1847 | 110.0 |
| Spirulina extract - fucoidan powder (phycocyanin to fucoidan ratio = 1 : 200) Beverage - pH 2.9 Accelerated storage | No | 59.2 | -3.9 | 18.5 | 0.1289 | 0.1091 | 0.0970 | 71.7 |
| | | | | | | | | |
| Spirulina extract - fucoidan powder (phycocyanin to fucoidan ratio = 1 : 400) Beverage - pH 2.9 Before thermal treatment | No | 45.0 | -5.5 | 21.6 | 0.4345 | 0.3874 | 0.3476 | 100.0 |
| Spirulina extract - fucoidan powder (phycocyanin to fucoidan ratio = 1 : 400) Beverage - pH 2.9 After thermal treatment | No | 40.5 | -3.7 | 23.0 | 0.4478 | 0.4144 | 0.3871 | 106.8 |
| Spirulina extract - fucoidan powder (phycocyanin to fucoidan ratio = 1 : 400) Beverage - pH 2.9 Accelerated storage | No | 46.2 | -0.3 | 24.3 | 0.3351 | 0.2904 | 0.2602 | 75.7 |
| *Absorbance is corrected by the detected turbidity (measured as absorbance at 750 nm) | | | | | | | | |

The determined color stability of a spirulina extract with a fucoidan to phycocyanin ratio of 1 : 4 in a beverage with pH 2.9 and 3.5 was comparable to the results of Example 1 (fucoidan to phycocyanin ratio of 1 : 1) with a remaining (total sum of) blue absorbance of 54 and 50%, respectively. Surprisingly, no sediment formation was detectable for both tested pH values after thermal processing and accelerated storage.

With further increasing amounts of fucoidan the remaining color stability along storage could be further increased. For example, with a phycocyanin to fucoidan ratio of 1 : 400 a remaining color of 76% could be determined (Table 5). In addition, the increased amount of fucoidan led to a color shift of the beverage from turquoise blue to more greenish blue (see L*a*b* values of Table 5).

**Example 3: Influence of the pH of the composition**

To investigate the influence of pH of the spirulina extract - fucoidan mixture on the protective effect of fucoidan, the pH of the aqueous spirulina extract - fucoidan mixture was adjusted to pH 3.0, 4.0 and 5.0 prior to its freeze -drying. Therefore, fucoidan from a fucoidan supplement (Life extension, containing 85% pure Fucoidan and microcrystalline cellulose) was dissolved in demineralized water to a 14 wt.% concentration. After stirring the solution for 30 min the microcrystalline cellulose was separated from the solution by a centrifugation at 5,000 g for 10 min. The supernatant (containing the dissolved fucoidan) was separated from the sediment and filled up with demineralized water to the initial volume, to maintain the initial fucoidan concentration. The solution was blended with a spirulina extract, containing 3.5 wt.% phycocyanin in a ratio of 1 : 1. The mixture had a pH of 6.7 and a phycocyanin to fucoidan weight ratio of 1 : 4. The pH value of the mixture was further adjusted to pH 5.0, 4.0 and pH 3.0 by the addition of a 10% citric acid solution.

A decrease of the pH of the spirulina extract - fucoidan mixture led to a shift of the color hue from royal blue to more turquoise. This effect was even more pronounced with decreasing pH. In addition the formation of aggregates was detected visibly at pH 3.0.

The products were frozen at -18°C and subsequently freeze-dried at 0.380 mbar for 24 h and additional 4h at 0.100 mbar (Alpha 2-4 LSC plus, Martin Christ Gefriertrocknungsanlagen GmbH).

The powders were characterized by the dry matter and phycocyanin content (according to Yoshikawa & Belay, 2008). Additionally the L*a*b* values were determined in a dilution (phosphate buffer, pH 7.0, Th Geyer) with an absorbance of 1.0 at 620 nm (see Table 6).

Table 6: Dry matter, phycocyanin content and L*a*b* values of spirulina extract - fucoidan powders with a phycocyanin to fucoidan ratio of 1 : 4 and various pH

|  | Dry matter [%] | Total phycocyanin [mg/g] | L* | a* | b* |
|---|---|---|---|---|---|
| Spirulina extract - fucoidan powder pH of liquid mixture adjusted to 5.0 | 98.1 | 273.3 | 71.4 | -20.7 | -38.9 |
| Spirulina extract - fucoidan powder pH of liquid mixture adjusted to 4.0 | 97.3 | 252.7 | 70.3 | -19.3 | -38.5 |
| Spirulina extract - fucoidan powder pH of liquid mixture adjusted to 3.0 | 95.8 | 171.4 | 68.2 | -18.4 | -36.3 |

The presence of aggregates was also detectable for two of the samples (pH adjusted to 3.0 and 4.0) after freeze-drying. Thus, insoluble particles remained when the powder was dissolved in water. However, a dissociation of the aggregated molecules and a visibly homogeneous solution with blue color was detectable for all tested powders as soon as high shear mixing was applied or the pH of the solution was increased to pH 6.0 or higher (see L*a*b* values within Table 6). However, a reduced amount of color-active phycocyanin in the final powder product was detectable for the spirulina extract fucoidan mixture with pH 3.0.

The influence of the pH of the spirulina extract - fucoidan mixture on fucoidans' property to act as a stabilizer was determined in a beverage model system (pH 2.9, 7 wt.% sucrose, 0.012 wt.% phycocyanin). Thereby, the aggregation behavior of the spirulina extract as well as the remaining color intensity were used as a measure to describe the color stability (see Table 7) along the processing of the beverage (e.g. blue absorbance before thermal treatment, after thermal treatment to 85°C and after accelerated storage (35 °C / 0.3 MLuxh)).

Table 7: Characteristics of a beverage (pH 2.9, containing 7 wt.% sucrose) with spirulina extract-fucoidan powders (phycocyanin to fucoidan ratio = 1 : 4) and various pH

|  | Sediment | L* | a* | b* | Abs 620* | Abs 650* | Abs 667* | % Total sum of blue absorbance |
|---|---|---|---|---|---|---|---|---|
| Spirulina extract - fucoidan powder (pH of liquid mixture adjusted to 5.0) Beverage - Before thermal treatment | No | 7945 | -15.7 | 0.1 | 0.3135 | 0.3260 | 0.3240 | 100.0 |

(continued)

| | Sediment | L* | a* | b* | Abs 620* | Abs 650* | Abs 667* | % Total sum of blue absorbance |
|---|---|---|---|---|---|---|---|---|
| Spirulina extract - fucoidan powder (pH of liquid mixture adjusted to 5.0) Beverage - After thermal treatment | No | 66.7 | -14.2 | 6.1 | 0.3570 | 0.3676 | 0.3589 | 112.4 |
| Spirulina extract - fucoidan powder (pH of liquid mixture adjusted to 5.0) Beverage - Accelerated storage | Yes | 71.8 | -6 | 8.5 | 0.2067 | 0.1964 | 0.1837 | 60.9 |
| | | | | | | | | |
| Spirulina extract - fucoidan powder (pH of liquid mixture adjusted to 4.0) Beverage - Before thermal treatment | Yes | 76.9 | -5.8 | 2.2 | 0.1339 | 0.1316 | 0.1209 | 100.0 |
| Spirulina extract - fucoidan powder (pH of liquid mixture adjusted to 4.0) Beverage - After thermal treatment | Yes | 71.5 | -2.8 | 4.8 | 0.0756 | 0.0769 | 0.0779 | 59.6 |
| Spirulina extract - fucoidan powder (pH of liquid mixture adjusted to 4.0) Beverage - Accelerated storage | Yes | 78.3 | -1.0 | 5 | 0.0520 | 0.0466 | 0.0428 | 36.6 |
| | | | | | | | | |
| Spirulina extract - fucoidan powder (pH of liquid mixture adjusted to 3.0) Beverage - Before thermal treatment | Yes | 77.9 | -2.9 | 2.7 | 0.0735 | 0.0698 | 0.0731 | 100.0 |
| Spirulina extract - fucoidan powder (pH of liquid mixture adjusted to 3.0) Beverage - After thermal treatment | Yes | 69.1 | -2.2 | 2.6 | 0.0420 | 0.0446 | 0.0422 | 59.5 |
| Spirulina extract - fucoidan powder (pH of liquid mixture adjusted to 3.0) Beverage - Accelerated storage | Yes | 84.1 | -1.0 | 3.3 | 0.0256 | 0.0242 | 0.0231 | 33.7 |
| *Absorbance is corrected by the detected turbidity (measured as absorbance at 750 nm) | | | | | | | | |

As can be seen from the data of the table above, the pH of the spirulina extract - fucoidan mixture prior to its drying has a crucial impact on the protective effect of the sulfated polysaccharide. Whereas with a pH of 5.0 an increased color stability (61% remaining total sum of blue absorbance) due to the addition of fucoidan was detectable, the protective effect of fucoidan stayed out with a decrease of the pH to 4.0 and 3.0.

**Example 4: Standardization of phycocyanin content in spirulina extract - fucoidan concentrates**

Preparation of a spray-dried powder

To prepare a spray dried spirulina extract - fucoidan powder, 127g maltodextrin (Glucidex® IT 12, Roquette) was added to 200 g of an aqueous spirulina extract - fucoidan solution. The aqueous spirulina extract - fucoidan solution with a phycocyanin to fucoidan - ratio of 1 : 4 was prepared by blending a 14 wt.% fucoidan solution with a spirulina extract (containing 3.5 wt.% phycocyanin) in a ratio of 1 : 1. The fucoidan solution was prepared by dissolving 14 wt.% fucoidan (Life extension, containing 85% pure fucoidan and microcrystalline cellulose) in demineralized. After stirring the solution for 30 min the microcrystalline cellulose was separated by a centrifugation at 5,000 g for 10 min. The supernatant (containing the dissolved fucoidan) was separated from the sediment and filled up with demineralized water to the initial volume to maintain the initial fucoidan concentration.

The slurry was dried with a laboratory spray-drier (Mini Spray Dryer B-290, BÜCHI Labortechnik AG). The inlet temperature was 140°C and the outlet temperature was 83 ± 2 °C.

The powder was analyzed on its dry matter and phycocyanin content (according to Yoshikawa & Belay, 2008). Additionally the L*a*b* values were determined in a dilution (phosphate buffer, pH 7.0, Th Geyer) with an absorbance of 1.0 at 620 nm.

Table 8: Dry matter, phycocyanin content and L*a*b* values of spray dried spirulina extract - fucoidan powder with a phycocyanin to fucoidan ratio of 1: 4

|  | Dry matter [%] | Total phycocyanin [mg/g] | L* | a* | b* |
|---|---|---|---|---|---|
| Spray-dried spirulina extract-fucoidan powder (phycocyanin to fucoidan ratio = 1: 4) | 96.9 | 26.0 | 74.0 | -19.7 | -30.8 |

Due to the addition of maltodextrin, the phycocyanin content of the powder can be standardized to lower contents. In this example a phycocyanin content of 26 mg/g powder was achieved. To investigate, if the addition of a carrier material has an influence on the protective effect of sulfated polysaccharides, the spray-dried spirulina extract - fucoidan powder was applied to a beverage model system (pH 2.9, 7 wt.% sucrose, 0.012 wt.% phycocyanin).

Thereby the aggregation behavior of the spirulina extract as well as the remaining color intensity were used as a measure to describe color stability along processing of the beverage (e.g. analysis before thermal treatment, after thermal treatment to 85 °C and after accelerated storage (35 °C/0.3 MLuxh)) of the beverage.

Table 9: Characteristics of a beverage system (pH 2.9, containing 7 wt.% sucrose) with a spray-dried spirulina extract fucoidan powder (Phycocyanin content 26.0 mg/g; phycocyanin to fucoidan ratio = 1 : 4)

|  | Sediment | L* | a* | b* | Abs 620* | Abs 650* | Abs 667* | % Total sum of blue abs. |
|---|---|---|---|---|---|---|---|---|
| SD Spirulina extract - fucoidan powder Beverage - Before thermal treatment | No | 85.7 | -15.4 | -4.3 | 0.2891 | 0.2904 | 0.2829 | 100.0 |
| SD Spirulina extract - fucoidan powder Beverage - After thermal treatment | No | 82.6 | -15.4 | -2.8 | 0.2977 | 0.3135 | 0.3080 | 106.6 |
| SD Spirulina extract - fucoidan powder Beverage - Accelerated storage | No | 87.0 | -7.2 | 0.5 | 0.1578 | 0.1582 | 0.1510 | 54.1 |
| *Absorbance is corrected by the detected turbidity (measured as absorbance at 750 nm) SD: Spray dried | | | | | | | | |

As can be seen from Table 9, the presence of a carrier material, such as maltodextrin, does not affect the protective effect of fucoidan. Thus, a constant color hue and increased relative amounts of the total sum of blue absorbance along the processing and after accelerated storage of the beverage are detectable.

Preparation of a liquid spirulina extract - fucoidan concentrate

To investigate if a protective effect of sulfated polysaccharides can also be achieved in liquid spirulina extract fucoidan concentrates, an aqueous spirulina extract fucoidan mixture was blended with invert sugar syrup and evaporated.

The aqueous spirulina extract fucoidan mixture was prepared by blending a 14 wt.% fucoidan solution with a spirulina extract (containing 3.5 wt.% phycocyanin) in a ratio of 1 : 1. The fucoidan solution was prepared by dissolving 14 wt.% of fucoidan from a fucoidan supplement (Life extension, containing 85% pure Fucoidan and microcrystalline cellulose) in demineralized water. After stirring the solution for 30 min, the microcrystalline cellulose was separated from the solution by a centrifugation at 5,000 g for 10 min. The supernatant (containing the dissolved fucoidan) was separated from the sediment and filled up with demineralized water to the initial volume, to maintain the initial fucoidan concentration. The mixture had a pH of 6.7 and a phycocyanin to fucoidan - ratio of 1 : 4.

64 g of invert sugar (69°Bx) were added to 200 g of the aqueous spirulina extract - fucoidan mixture and evaporated (Rotary 20 evaporator, Heidolph) at ambient temperature and 29 mbar until a brix of 65 °Bx was reached. The viscous liquid had a water content of 34.3 wt.%.

The concentrated liquid was characterized by dry matter and phycocyanin content (according to Yoshikawa & Belay, 2008). Additionally the L*a*b* values were determined in a dilution (phosphate buffer, pH 7.0, Th Geyer) with an absorbance of 1.0 at 620 nm (see Table 10).

Table 10: Dry matter, phycocyanin content and L*a*b* values of liquid spirulina extract - fucoidan concentrate with a fucoidan to phycocyanin ratio of 1 : 4

|  | Dry matter [%] | Total phycocyanin [mg/g] | L* | a* | b* |
|---|---|---|---|---|---|
| Liquid spirulina extract - fucoidan concentrate | 65.7% | 41.2 | 69.6 | -21.2 | -34.4 |

Due to the addition of invert sugar and concentrating the liquid mixture by means of evaporation a phycocyanin content of 4.1 wt.% was achieved. To further reduce the amount of phycocyanin, higher amounts of invert sugar can be added.

The protective effect of fucoidan was evaluated in a beverage model system (pH 2.9, 7 wt.% sucrose, 0.012 wt.% phycocyanin). Thereby, the aggregation behavior of the spirulina extract as well as the remaining color intensity were measured along processing of the beverage (e.g. analysis before thermal treatment, after thermal treatment to 85 °C and after accelerated storage (35°C/0.3 MLuxh)) of the beverage.

Table 11: Characteristics of a beverage system (pH 2.9, containing 7 wt.% sucrose) with liquid spirulina extract - fucoidan concentrate (phycocyanin to fucoidan ratio of 1 : 4)

|  | Sediment | L* | a* | b* | Abs 620* | Abs 650* | Abs 667* | % Total sum of blue absorbance |
|---|---|---|---|---|---|---|---|---|
| Liquid spirulina extract - fucoidan concentrate Beverage - Before thermal treatment | No | 87.7 | -15.7 | -5.7 | 0.2836 | 0.2911 | 0.2869 | 100.0 |
| Liquid spirulina extract - fucoidan concentrate Beverage - After thermal treatment | No | 86.4 | -16.0 | -5.7 | 0.2935 | 0.3137 | 0.3100 | 106.5 |
| Liquid spirulina extract - fucoidan concentrate Beverage -Accelerated storage | No | 89.7 | -7.4 | -2.1 | 0.1546 | 0.1575 | 0.1510 | 53.8 |
| *Absorbance is corrected by the detected turbidity (measured as absorbance at 750 nm) |

As can be seen from the table above, the preparation of a liquid spirulina extract fucoidan concentrate shows similar stable color hues and increased relative amounts of total sum of blue absorbance as compared to spirulina extract fucoidan powders (Table 5).

**Example 4: Comparative Examples**

Different polysaccharides were evaluated on their protective effect on the color stability of spirulina extracts. Beside κ-carrageenan, a sulfated polysaccharide from red seaweed, also two different pectins were used.

κ-carrageenan (Ticaloid® 710, Lot Number 36860 from TIC GUMS) was diluted in demineralized water to a concentration of 2 wt%. The solution was stirred for 2 hours at 40 °C to ensure complete hydration of the powder. Pectin AB 908 (Pectin Classic AB 908, Lot number 01812179 from Herbstreith & Fox) as well as Pectin CM 203 (Pectin Classic CM 203, Lot number 01705391 from Herbstreith & Fox) were diluted in demineralized water to a concentration of 5 wt%. The solutions were stirred for 1 hour at 40 °C to ensure complete hydration. Since the pH of the Pectin AB 908 solution was less than 4.0, the pH was adjusted to pH 5.5 by the addition of a 10% trisodium -citrate solution in an additional step.

All three hydrocolloid solutions were blended with an aqueous spirulina extract, containing 3.5 wt% phycocyanin, to get a phycocyanin to hydrocolloid ratio of 1 : 4. The final pH of the mixtures were as follows:

Spirulina extract - κ-carrageenan mixture:     pH 6.8
Spirulina extract - Pectin AB 908 mixture:      pH 5.0
Spirulina extract - Pectin CM 203 mixture:      pH 5.6

The mixtures were frozen at -18 °C and subsequently freeze-dried at 0.380 mbar for 30 h (Alpha 2-4 LSC plus, Martin Christ Gefriertrocknungsanlagen GmbH).

The powders were characterized by the dry matter and phycocyanin content (according to Yoshikawa & Belay, 2008). Additionally the L*a*b* values were determined in a dilution (phosphate buffer, pH 7.0, Th Geyer) with an absorbance of 1.0 at 620 nm. The data are summarized in Table 12.

Table 12: Dry matter, phycocyanin content and L*a*b* values of freeze dried spirulina extract powders with different hydrocolloids as stabilizers

|  | Dry matter [%] | Total phycocyanin [mg/g] | L* | a* | b* |
|---|---|---|---|---|---|
| Spirulina extract-κ-carrageenan powder | 93.9 | 119.8 | 71.3 | -20.4 | -39.5 |
| Spirulina extract - pectin "AB 908" powder | 94.3 | 145.9 | 68.6 | -21.5 | -33.3 |
| Spirulina extract - pectin "CM 203" powder | 95.6 | 137.4 | 70.6 | -20.9 | -37.6 |

The spirulina extract - κ-carrageenan powder was used to color a beverage model system (7 wt.% sucrose and 0.012 wt% phycocyanin) with pH 2.9 and 3.5. The spirulina extract - pectin powders were used to color a beverage model system (7 wt.% sucrose, 0.012 wt% phycocyanin) with pH 2.9. The results of this experiments should demonstrate if also other polysaccharides interact with phycocyanin and increase the color stability of spirulina extracts against thermal treatment in low pH value applications. Thereby the aggregation behavior of the spirulina extract as well as the remaining color intensity were determined along processing of the beverage (e.g. analysis before thermal treatment, after thermal treatment to 85°C and after accelerated storage (35°C; 0.3 MLuxh)).

Table 13: Characteristics of a beverage (containing 7 wt.% sucrose) with spirulina extract powders with different hydrocolloids as stabilizers (phycocyanin to hydrocolloid ratio = 1 : 4)

|  | Sediment | L* | a* | b* | Abs 620* | Abs 650* | Abs 667* | % Total sum of blue absorbance |
|---|---|---|---|---|---|---|---|---|
| Spirulina extract-κ-carrageenan powder Beverage - pH 3.5 Before heating | No | 88.8 | -16.8 | -10.7 | 0.3155 | 0.2974 | 0.2785 | 100.0 |

(continued)

| | Sediment | L* | a* | b* | Abs 620* | Abs 650* | Abs 667* | % Total sum of blue absorbance |
|---|---|---|---|---|---|---|---|---|
| Spirulina extract-κ-carrageenan powder Beverage - pH 3.5 After heating | No | 86.5 | -16.6 | -7.4 | 0.3065 | 0.3199 | 0.3110 | 105.2 |
| Spirulina extract-κ-carrageenan powder Beverage - pH 3.5 Accelerated storage | No | 90.7 | -2.9 | 3.8 | 0.0808 | 0.0734 | 0.0672 | 24.8 |
| | | | | | | | | |
| Spirulina extract-κ-carrageenan powder Beverage - pH 2.9 Before heating | No | 88.6 | -15.5 | -8.3 | 0.2888 | 0.2683 | 0.2454 | 100.0 |
| Spirulina extract-κ-carrageenan powder Beverage - pH 2.9 After heating | No | 87.8 | -15.0 | -5.6 | 0.2695 | 0.2814 | 0.2727 | 102.6 |
| Spirulina extract-κ-carrageenan powder Beverage - pH 2.9 Accelerated storage | No | 88.1 | -7.8 | 1.6 | 0.1551 | 0.1555 | 0.1476 | 57.1 |
| | | | | | | | | |
| Spirulina extract - pectin "AB 908" powder Beverage - pH 2.9 Before heating | No | 80.3 | -15.1 | -4.0 | 0.3528 | 0.2394 | 0.1943 | 100.0 |
| Spirulina extract - pectin "AB 908" powder | No | 75.1 | -12.1 | 6.1 | 0.2927 | 0.2770 | 0.2574 | 105.2 |
| Beverage - After heating | | | | | | | | |
| Spirulina extract - pectin "AB 908" powder Beverage - pH 2.9 Accelerated storage | No | 82.4 | -0.9 | 13.6 | 0.0796 | 0.0637 | 0.0545 | 25.2 |
| | | | | | | | | |
| Spirulina extract - pectin "CM 203" powder Beverage - pH 2.9 Before heating | No | 75.4 | -15.9 | -6.0 | 0.4377 | 0.2374 | 0.1715 | 100.0 |
| Spirulina extract - pectin "CM 203" powder Beverage - pH 2.9 After heating | No | 77.5 | -11.6 | 3.3 | 0.2788 | 0.2554 | 0.2339 | 90.7 |
| Spirulina extract - pectin "CM 203" powder Beverage - pH 2.9 Accelerated storage | No | 87.7 | -0.6 | 11.9 | 0.0524 | 0.0400 | 0.0333 | 14.8 |
| *Absorbance is corrected by the detected turbidity (measured as absorbance at 750 nm) | | | | | | | | |

Surprisingly, neither κ-carrageenan nor pectin showed a comparable protective effect on the color stability of phycocyanin as it was demonstrable for fucoidan . Whereas κ-carrageenan improved the color stability against thermal treatment and along storage at pH 2.9, high losses in the blue absorbance after accelerated storage for a beverage with pH 3.5 were detected.

The use of both tested pectins somehow protected the color stability against thermal treatment, but only 25% and 15% of the initial color intensity remained after accelerated storage. Additionally, a drastic shift of the beverage color hue from blue to a greenish blue (see L*a*b* values in Table 13) was detectable.

**Claims**

1. Use of a sulfated polysaccharide to stabilize a phycocyanin containing foodstuff, with the proviso that the sulfated polysaccharide is not a sulfated carrageenan.

2. Use according to claim 1, wherein the sulfated polysaccharide is an extract from macroalgae.

3. Use according to claim 1 or 2, wherein the sulfated polysaccharide is a fucose containing sulfated polysaccharide, preferably a fucoidan.

4. Use according to claim 3, wherein the fucoidan is a fucoidan from an extract of *Fucus vesiculosus* or from an extract of *Undaria pinnatifida.*

5. Use according to any one of the preceding claims, wherein the weight ratio of sulfated polysaccharide to phycocyanin is from 0.5:1 to 400:1, preferably from 0.75:1 to 50:1, more preferably from 1:1 to 20:1.

6. Use according to any one of the preceding claims, wherein the phycocyanin is a phycocyanin from spirulina-extract.

7. Use according to any one of the preceding claims, wherein the foodstuff is selected from the group consisting of syrups, jams, jellies, beverages, confectionary, fruit preparations, condiments and sauces.

8. A composition for stabilizing a phycocyanin containing foodstuff, comprising:

   a spirulina-extract comprising phycocyanin
   a sulfated polysaccharide,

   wherein the composition comprises
   0.5-50 wt.%, preferably 1-40 wt.%, more preferably 2-30 wt.% phycocyanin and wherein the weight ratio of sulfated polysaccharide to phycocyanin is from 0.5:1 to 400:1, preferably from 0.75:1 to 50:1, more preferably from 1:1 to 20:1;
   wherein the wt.% is relative to the total composition,
   with the proviso that the composition does not contain a seaweed extract other than a fucoidan containing extract;
   with the proviso that the sulfated polysaccharide is not a sulfated carrageenan.

9. The composition according to claim 8, wherein the sulfated polysaccharide is a fucoidan.

10. A formulation for stabilizing a phycocyanin containing foodstuff comprising
    0.5-95 wt.% of a composition according to claim 8 or 9 and 5-99.5 wt.% of a carrier.

11. The formulation according to claim 10, which is a dry powder or granule, comprising
    a spirulina-extract comprising phycocyanin
    a sulfated polysaccharide, preferably fucoidan
    a carrier
    water
    wherein the formulation comprises 0.5-50 wt.%, preferably 1-40 wt.%, more preferably 2-30 wt.% phycocyanin; and 0.1-15 wt.% water,
    wherein the carrier is preferably selected from the group consisting of maltodextrin, sucrose, starch, alginate and chitosan.

12. The formulation according to claim 10, which is a liquid formulation comprising
    a spirulina-extract comprising phycocyanin
    a sulfated polysaccharide, preferably fucoidan

water as the carrier

wherein the liquid formulation comprises 0.5-12 wt.%, preferably 0.75-9 wt.%, more preferably 1.5-7.75 wt.% phycocyanin; and 15-60 wt.% water

wherein the liquid formulation preferably further comprises one or more of glycerol, sugar alcohols, monosaccharide or disaccharide, in particular glucose, fructose, sucrose, invert sugar, trehalose, lactose or mixtures thereof.

13. A liquid foodstuff comprising

a spirulina-extract comprising phycocyanin

a sulfated polysaccharide, preferably fucoidan

water

wherein the foodstuff comprises

0.003-0.1 wt.%, preferably 0.006-0.1 wt.%, more preferably 0.008-0.05 wt.% phycocyanin and 45-99 wt.% water;

wherein the weight ratio of sulfated polysaccharide to phycocyanin is from 0.5:1 to 400:1, preferably 0.75:1 to 50:1, more preferably 1:1 to 20:1

with the proviso that the sulfated polysaccharide is not a sulfated carrageenan.

14. The liquid foodstuff according to claim 13, which is a beverage with a pH of 2.5-4.6.

15. The liquid foodstuff according to claim 13, which is a beverage with a pH of 4.7-8, wherein the beverage further contains a chelating agent.

16. The liquid foodstuff according to claim 13, wherein the foodstuff is a selected from the group consisting of juice, juice drink, smoothie, dairy beverage, dairy alternative, nut milk, sports drink, flavored tea, flavored water, carbonated beverage, non-carbonated beverage, nutritional drink and alcoholic beverage.

17. A method of stabilizing a phycocyanin containing foodstuff, comprising the steps of:

mixing a spirulina extract comprising phycocyanin and a sulfated polysaccharide with water at a pH of at least 5, obtaining a mixture; adding the mixture to a foodstuff;

wherein the weight ratio of sulfated polysaccharide to phycocyanin is from 0.5:1 to 400:1, preferably from 0.75:1 to 50:1, more preferably from 1:1 to 20:1, with the proviso that the sulfated polysaccharide is not a sulfated carrageenan.

Europäisches
Patentamt

European
Patent Office

Office européen
des brevets

# EUROPEAN SEARCH REPORT

Application Number

EP 20 18 6554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | CN 107 899 005 A (BEIJING YIFANG BIOTECHNOLOGY CO LTD) 13 April 2018 (2018-04-13) * paragraphs [0006], [0010], [0015]; claims 1,7-9 * | 1-17 | INV. A23L2/52 A23L5/46 A23L2/58 A23L29/256 |
| X | US 2013/115195 A1 (CAPPELLO JOHN V [US]) 9 May 2013 (2013-05-09) * paragraphs [0041], [0061]; claims 1-3,16; example 1 * | 8-16 | |
| X | EP 0 693 535 A1 (UNIV BEN GURION [IL]) 24 January 1996 (1996-01-24) * page 3, lines 12-17, 41-48 * | 1,6-8, 10-15,17 | |
| A | WO 2018/134390 A1 (ADM WILD EUROPE GMBH & CO KG [DE]) 26 July 2018 (2018-07-26) * claims 1,11-15; example 1 * | 1-17 | |
| A | KR 2018 0129123 A (CATHOLIC UNIV KOREA IND ACADEMIC COOPERATION FOUNDATION [KR]) 5 December 2018 (2018-12-05) * paragraphs [0001] - [0010]; claims 1,6; examples 1-6 * | 1-17 | TECHNICAL FIELDS SEARCHED (IPC) A23L |

The present search report has been drawn up for all claims

| Place of search | Date of completion of the search | Examiner |
|---|---|---|
| The Hague | 25 February 2021 | Tallgren, Antti |

## ANNEX TO THE EUROPEAN SEARCH REPORT
## ON EUROPEAN PATENT APPLICATION NO.

EP 20 18 6554

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2021

| Patent document cited in search report | | Publication date | Patent family member(s) | | Publication date |
|---|---|---|---|---|---|
| CN 107899005 | A | 13-04-2018 | NONE | | |
| US 2013115195 | A1 | 09-05-2013 | NONE | | |
| EP 0693535 | A1 | 24-01-1996 | AU | 699775 B2 | 17-12-1998 |
| | | | BR | 9503398 A | 27-02-1996 |
| | | | CA | 2154144 A1 | 22-01-1996 |
| | | | CN | 1119660 A | 03-04-1996 |
| | | | EP | 0693535 A1 | 24-01-1996 |
| | | | IL | 110396 A | 16-07-2000 |
| | | | JP | H08168387 A | 02-07-1996 |
| | | | KR | 960004450 A | 23-02-1996 |
| | | | US | 5643585 A | 01-07-1997 |
| WO 2018134390 | A1 | 26-07-2018 | EP | 3570689 A1 | 27-11-2019 |
| | | | US | 2019357573 A1 | 28-11-2019 |
| | | | WO | 2018134390 A1 | 26-07-2018 |
| KR 20180129123 | A | 05-12-2018 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2018271119 A
- CN 107899005 A
- EP 2019081792 W
- EP 2019081790 W
- EP 2019081806 W
- EP 2019081840 W
- CN 107899005

### Non-patent literature cited in the description

- **SELIG et al.** *Food Hydrocolloids,* 2017, vol. 74, 46-52
- **DEWI et al.** *IOP Conf. Ser.: Earth Environ. Sci.,* 2017, vol. 55
- **GUANGLING JIAO et al.** *Mar.Drugs,* 2011, vol. 9, 196-223
- Natural Solutions for Blue Colors in Food. **BUCHWEITZ, M.** Handbook on Natural Pigments in Food and Beverages. Woodhead Publishing, 2016, vol. 17, 355-384
- **DEWI, E. N. et al.** Physical characteristics of phycocyanin from Spirulina microcapsules using different coating materials with freeze drying method. *IOP Conf. Ser.: Earth Environ. Sci.,* 2017, vol. 55
- **SELIG, M.J. et al.** Protection of blue color in a spirulina derived phycocyanin extract from proteolytic and thermal degradation via complexation with beet-pectin. *Food Hydrocolloids,* 2017, vol. 74, 46-52
- **YOSHIKAWA, N. ; BELAY, A.** Single-Laboratory Validation of a Method for the Determination of c-Phycocyanin and Allophycocyanin in Spirulina (Arthrospira) Supplements and Raw Materials by Spectrophotometry. *Journal of AOAC International,* 2008, vol. 91, 524-529